# DEMANDE DE BREVET EUROPEEN

(11) **EP 4 803 370 A1**
(43) Date de publication de la demande: **09.09.2026**
(21) Numéro de dépôt: 26156666.5
(22) Date de dépôt: 05.02.2026
(51) Int. Cl.: B60Q 1/04, B60Q 1/26, B60R 19/18

(54) **DISPOSITIF LUMINEUX CONTRE PEAU DE PARE-CHOCS DE VÉHICULE AUTOMOBILE ET VÉHICULE AUTOMOBILE**

(30) Priorité: 06.03.2025 FR 2502245
(71) Demandeur: Stellantis Auto SAS, 78300 Poissy (FR)
(72) Inventeur: BOUDAN, JULIEN, 91210 DRAVEIL (FR); PERON, RODOLPHE, 95220 HERBLAY SUR SEINE (FR); DESSI, BRUNO, 25260 ETOUVANS (FR)
(74) Mandataire: BCIP

(57) **Abrégé**

L'invention a pour objet un dispositif lumineux (20) de véhicule automobile, notamment un feu arrière. Le dispositif lumineux (20) comprend un boîtier (26) directement fixé à la structure principale du véhicule automobile, une glace extérieure (28) ; un logement (50) entre le boîtier et la glace extérieure ; une source lumineuse (52) ; la glace extérieure comprenant un premier bord (38) longeant une peau de pare-chocs (14) et présentant une première longueur. Le boîtier (26) est monobloc et comprend une gorge de maintien (30) avec une surface de maintien (64) continue sur au moins une moitié de la première longueur du premier bord. La surface de maintien (64) coopère avec un deuxième bord (32) de la peau de pare-chocs et comprend des moyens de rétention (58) coopérant avec ledit deuxième bord de peau de pare-chocs afin de maintenir la peau de pare-chocs le long de la glace extérieure (28).

## Description

L'invention traite du positionnement d'une peau de pare-chocs par rapport à un dispositif lumineux. L'invention concerne un jeu mécanique entre une peau de pare-chocs et un dispositif lumineux. L'invention se rapporte au domaine des dispositifs lumineux avec un boîtier présentant des moyens de positionnement de peau de pare-chocs. L'invention a également pour objet un véhicule automobile.

Un véhicule automobile est équipé de dispositifs lumineux arrière ; communément appelés feux arrière. Ces feux arrière permettent d'éclairer l'environnement du véhicule, et d'émettre des signaux normés à l'attention des autres usagers de la route. Par sécurité, les feux arrière doivent émettre un rayonnement lumineux suffisamment intense pour rendre visible le véhicule à une distance prédéfinie.

En façade arrière, les dispositifs lumineux s'intègrent dans la carrosserie du véhicule automobile. Là, ils jouxtent la peau de pare-chocs, et éventuellement des ailes latérales. Ils s'intègrent également au niveau de l'ouvrant arrière, généralement désigné en tant que hayon de coffre. En particulier, on observe un jeu mécanique contrôlé entre la peau de pare-chocs et chaque dispositif lumineux arrière. La finesse et la régularité de chaque jeu mécanique contribuent à la qualité perçue.

Afin d'optimiser la précision de positionnement, le dispositif lumineux est couramment fixé à la caisse grâce à un support de maintien sur lequel il repose. Le support de maintien est également relié à la peau de pare-chocs afin de le relier au dispositif lumineux. Le support de maintien est encore fixé à la caisse, ce qui permet d'augmenter la robustesse de fixation. Toutefois la présence du support de maintien présuppose l'existence d'un volume suffisant pour l'accueillir sous le dispositif lumineux. Par ailleurs, la structure qui l'accueille doit offrir une surface de fixation suffisante et sans obstacles.

Le document JP4066061B2 présente un véhicule automobile avec un dispositif lumineux jouxtant une peau de pare-chocs avant. Le dispositif lumineux comprend des pinces rapportées sous son boîtier. Les pinces maintiennent un bord supérieur de la peau de pare-chocs.

Le document JP4285434B2 traite d'un élément de support de pare-chocs de véhicule automobile. L'élément de support est fixé dans une position éloignée de la position sous la lampe et est pourvu d'une partie d'extension s'étendant jusqu'à la position sous la lampe, et la partie d'extension est supportée par la lampe, et la partie du pare-chocs qui est positionnée sous la lampe est supportée par la partie d'extension.

Le document JPH0858498A décrit un véhicule automobile avec un dispositif lumineux avant au-dessus d'une peau de pare-chocs. Le véhicule comprend une structure sur laquelle est fixée une portion de montage supportant le boîtier du dispositif de fixation. Une portion de support reçoit le bord supérieur de la peau de pare-chocs et est fixée à la portion de montage.

Le document FR2871432B1 montre un bloc projecteur pour véhicule automobile. Le bloc projecteur comporte un projecteur dont la paroi inférieure est solidaire d'un support de bouclier du véhicule, le bloc projecteur comportant sur sa partie arrière d'extrémité au moins une première fixation à la structure du véhicule. La partie avant du support est apte à supporter le bouclier du véhicule de manière à le maintenir à une distance prédéterminée sous la paroi inférieure du projecteur.

Le document FR3035855A1 concerne un véhicule comprenant un bouclier et un projecteur avec une glace et un boîtier. Le bouclier comprend une extension apte à se placer contre ledit projecteur, ladite extension est fixée audit projecteur avec des moyens d'accroche réversibles. Le bouclier est fixé à la glace qui le sépare du boîtier.

Le document EP2983948B1 concerne un système de retenue d'un pare-chocs contre un élément de construction d'une voiture de tourisme, ledit pare-chocs comportant au moins un élément d'habillage et un élément support correspondant. L'élément d'habillage est maintenu sur l'élément de construction par l'intermédiaire de l'élément support, l'élément de construction étant conçu en tant qu'élément d'étanchéité d'une unité d'éclairage de la voiture de tourisme.

Le document FR3144856A1 présente un bloc optique de véhicule automobile comportant un boîtier refermé par une glace comprenant une façade avant destinée à être entourée au moins partiellement par une peau de pare-chocs, ladite glace comprenant également un rebord extérieur s'étendant vers l'arrière depuis et le long d'au moins une partie du contour extérieur de ladite façade avant. Le bloc optique comporte en outre plusieurs éléments support s'étendant en dessous de la partie inférieure dudit rebord extérieur de la glace et formant des surfaces d'appui pour la face inférieure d'un bord tombé d'une portion de ladite peau, ainsi que plusieurs bossages saillant depuis la face inférieure de ladite partie inférieure du rebord extérieur et formant des surfaces d'appui pour la face supérieure dudit bord tombé, de sorte que ce dernier soit pris verticalement en sandwich entre lesdits bossages et lesdits éléments support.

Les solutions génèrent des concentrations de contraintes et déforment la peau de pare-chocs. Cela déforme ponctuellement la peau de pare-chocs et dégrade le rendu du jeu mécanique entre la peau de pare-chocs et la glace du dispositif lumineux. Par ailleurs, les déformations créent des vagues visibles en lumière rasante. Ces déformations ; même infimes ; pénalisent la qualité perçue du véhicule.

Par ailleurs, il existe un besoin d'améliorer la capacité du véhicule à résister à un choc réparabilité ; par exemple un choc à basse vitesse lors d'une manœuvre de stationnement. Enfin, la conception d'un véhicule automobile tend à restreindre l'espace disponible pour accueillir le dispositif lumineux. Ainsi, il existe un besoin d'optimiser la compacité et la résistance d'un dispositif lumineux.

L'invention a pour objectif de répondre à au moins un des problèmes ou inconvénients rencontrés dans l'art antérieur. En particulier, l'invention a pour objectif d'améliorer la qualité perçue d'un véhicule automobile. L'invention a également pour objectif d'optimiser la précision de positionnement, le coût, l'assemblage d'un véhicule automobile.

Selon un premier aspect, l'invention propose un dispositif lumineux de véhicule automobile ; le dispositif lumineux comprenant un boîtier, une glace extérieure fixée au boîtier ; un logement entre le boîtier et la glace extérieure ; une source lumineuse dans le logement ; la glace extérieure comprenant un premier bord destiné à longer une peau de pare-chocs et présentant une première longueur ; **remarquable en ce que** le boîtier est monobloc et comprend une gorge de maintien avec une surface de maintien continue sur au moins une moitié de la première longueur du premier bord, ladite surface de maintien étant destinée à coopérer avec un deuxième bord de la peau de pare-chocs et comprenant des moyens de rétention destinés à coopérer avec ledit deuxième bord de peau de pare-chocs afin de maintenir la peau de pare-chocs le long de la glace extérieure.

Grâce à la gorge de positionnement directement rapportée au boîtier, il devient possible de positionner la peau de pare-chocs précisément par rapport à la glace extérieure. Par ailleurs, la configuration de l'invention optimise le nombre de pièces et le nombre d'étapes de montage.

Préférentiellement, le boîtier comprend une paroi de fond opposée à la glace extérieure et formant le fond du logement ; une plaque de maintien délimitant la gorge de maintien et s'étendant jusqu'à la paroi de fond.

Préférentiellement, la plaque de maintien comprend un plan moyen, la glace extérieure s'étendant jusqu'au niveau dudit plan moyen.

Préférentiellement, le long du premier bord de la glace extérieure, le boîtier comprend une paroi de liaison contre la glace extérieure ; une lame de positionnement délimitant la gorge de maintien, la plaque de maintien étant entre la paroi de liaison et la lame de positionnement.

Préférentiellement, la gorge de maintien est une gorge de maintien centrale au centre du premier bord.

Préférentiellement, le boîtier est venu de matière.

Préférentiellement, le dispositif lumineux comprend une direction principale d'émission lumineuse, la première longueur étant transversale à ladite direction principale.

Préférentiellement, le dispositif lumineux est un dispositif lumineux arrière.

Préférentiellement, la gorge de maintien est continue transversalement.

Préférentiellement, la surface de maintien est droite.

Préférentiellement, le boîtier comprend une paroi de fond comprenant des moyens de fixation destinés à être fixé à une structure principale du véhicule automobile.

Préférentiellement, les moyens de rétention comprennent une butée.

Préférentiellement, le premier bord est un bord horizontal.

Préférentiellement, le boîtier présente une séparation entre la paroi de liaison et la plaque de maintien.

Selon un autre aspect, l'invention propose un dispositif lumineux de véhicule automobile avec un peau de pare-chocs ; le dispositif lumineux comprenant un boîtier, une glace extérieure fixée au boîtier ; un logement entre le boîtier et la glace extérieure ; une source lumineuse dans le logement ; la glace extérieure comprenant un premier bord avec une première longueur ; le premier bord étant destiné à longer la peau de pare-chocs ; **remarquable en ce que** le boîtier est monobloc et comprend une gorge de maintien centrale continue sur au moins une moitié de la première longueur du premier bord, ladite gorge de maintien centrale étant destinée à recevoir un deuxième bord de peau de pare-chocs et comprenant des moyens de rétention destinés à coopérer avec ledit bord de peau de pare-chocs afin de bloquer la peau de pare-chocs dans la gorge de maintien.

Selon un autre aspect, l'invention propose un véhicule automobile comprenant : une structure principale ; un dispositif lumineux ; une peau de pare-chocs ; **remarquable en ce que** le dispositif lumineux est conforme à l'invention ; et en ce que la peau de pare-chocs comprend un deuxième bord dans la gorge de maintien.

Préférentiellement, le deuxième bord est un bord supérieur et la peau de pare-chocs est une peau de pare-chocs arrière.

Préférentiellement, le deuxième bord comprend un orifice de rétention coopérant avec les moyens de rétention ; les moyens de rétention comprennent une butée engagée dans ledit orifice de rétention.

Préférentiellement, la première longueur est une longueur transversale.

Préférentiellement, la gorge de maintien comprend une face supérieure et une face inférieure, le premier bord étant contre la face supérieure ; le premier bord étant verticalement à distance de la face inférieure.

Préférentiellement, le boîtier comprend des moyens de fixation fixés à la structure principale ; les moyens de fixation étant verticalement à distance de la gorge de maintien.

Préférentiellement, la structure principale comprend une première tôle, une deuxième tôle, une zone de soudure de la première tôle à la deuxième tôle, la zone de soudure étant recouverte par la peau de pare-chocs ; le véhicule automobile présentant un écartement d'au plus 60 mm, plus préférentiellement d'au plus 40 mm entre la zone de soudure et la gorge de maintien.

Préférentiellement, le véhicule automobile comprend un renfort de peau de pare-chocs arrière, le renfort étant à distance de la gorge de maintien.

Préférentiellement, la paroi de fond est une paroi avant.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de profil d'un véhicule automobile selon l'invention.
La figure 2 est un éclaté d'un ensemble présentant une structure principale, un dispositif lumineux, une peau de pare-chocs arrière de véhicule automobile selon l'invention.
La figure 3 est une vue arrière d'un dispositif lumineux contre une structure principale de véhicule automobile selon l'invention.
La figure 4 représente un boîtier de dispositif lumineux de véhicule automobile selon l'invention.
La figure 5 expose une partie de gorge de maintien de dispositif lumineux de véhicule automobile selon l'invention.
La figure 6 est une coupe longitudinale d'un dispositif lumineux pour véhicule automobile selon l'invention.

Dans la description qui suit, le terme « comprendre » est synonyme de « inclure » et n'est pas limitatif en ce qu'il autorise la présence d'autres éléments dans le véhicule automobile ou le dispositif lumineux auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage du dispositif lumineux, à moins que le contraire ne soit mentionné explicitement.

Au travers de la description, les différentes figures utilisent les mêmes signes de référence pour désigner des entités identiques ou similaires.

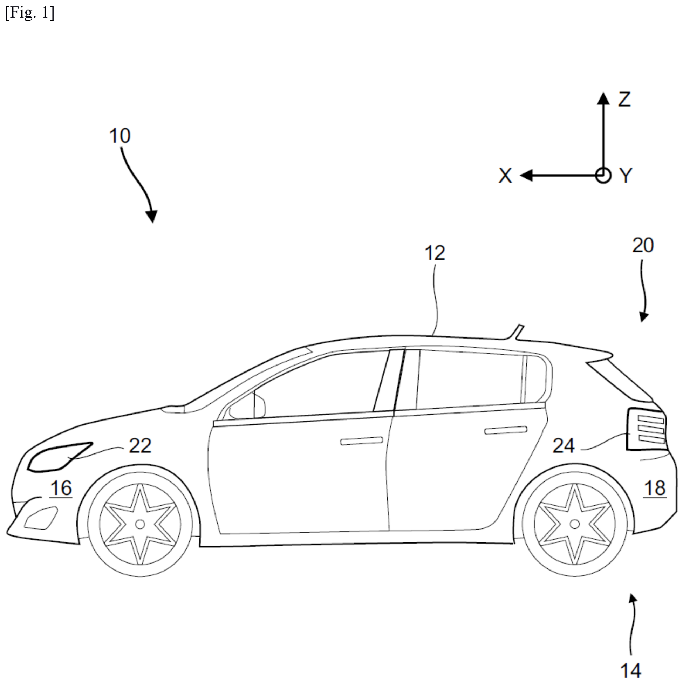

La figure 1 représente un véhicule automobile 10, selon un mode de réalisation de l'invention. Le véhicule automobile 10 comprend des moyens de stockage d'énergie et au moins un moteur (non représentés) adaptés pour entraîner ledit véhicule automobile 10.

Le véhicule automobile 10 comprend une structure principale 12. La structure principale 12 forme une caisse extérieure, ou encore une ossature principale du véhicule automobile. Elle est formée d'un assemblage de tôles métalliques embouties et assemblées par soudure. La structure principale 12 supporte différents organes du véhicule automobile 10 dont le moteur, les trains roulants et les systèmes de suspension, un système de direction ; et les moyens de stockage d'énergie.

Le véhicule automobile 10 comprend au moins une peau de pare-chocs 14, par exemple une peau de pare-chocs avant 16 et une peau de pare-chocs arrière 18. Chaque peau de pare-chocs 14 est apte à se déformer élastiquement en cas de collision à faible vitesse contre un obstacle. Par faible vitesse on entend une vitesse d'au plus 10 km/h. La déformation élastique est une déformation au cours de laquelle la peau pare-chocs 14 revient en position sans que ne subsiste de déformation permanente après éloignement de l'obstacle impliqué dans la collision.

Le véhicule automobile 10 comprend au moins un dispositif lumineux 20, dont un dispositif lumineux avant 22 associé à la peau de pare-chocs avant 16 ; et un dispositif lumineux arrière 24 associé à la peau de pare-chocs arrière 18. Chaque dispositif lumineux 20 est relié à une alimentation électrique du véhicule automobile. En fonction de l'alimentation électrique reçue, le dispositif lumineux 20 émet ou non un rayonnement lumineux.

Chaque dispositif lumineux 20 est apte à émettre des faisceaux lumineux. Il est configuré pour éclairer l'environnement du véhicule, et optionnellement pour générer un éclairage réglementaire. Il peut émettre des signaux lumineux de sécurité à l'attention des autres usagers de la route. Il émet un rayonnement lumineux continu et un rayonnement clignotant.

Les dispositifs lumineux 20 sont montés sur la structure principale 12 du véhicule automobile 10. Ils sont attenants aux peaux de pare-chocs 14. Le dispositif lumineux avant 22 est intégré entre un capot avant et la peau de pare-chocs avant 16. Le dispositif lumineux arrière 24 est intégré entre un volet de coffre et la peau de pare-chocs arrière 18. Le dispositif lumineux arrière 24 est également appelé feu arrière. Les dispositifs lumineux sont disposés à gauche et à droite.

Le véhicule automobile peut par exemple être un véhicule automobile particulier ou un véhicule automobile utilitaire.

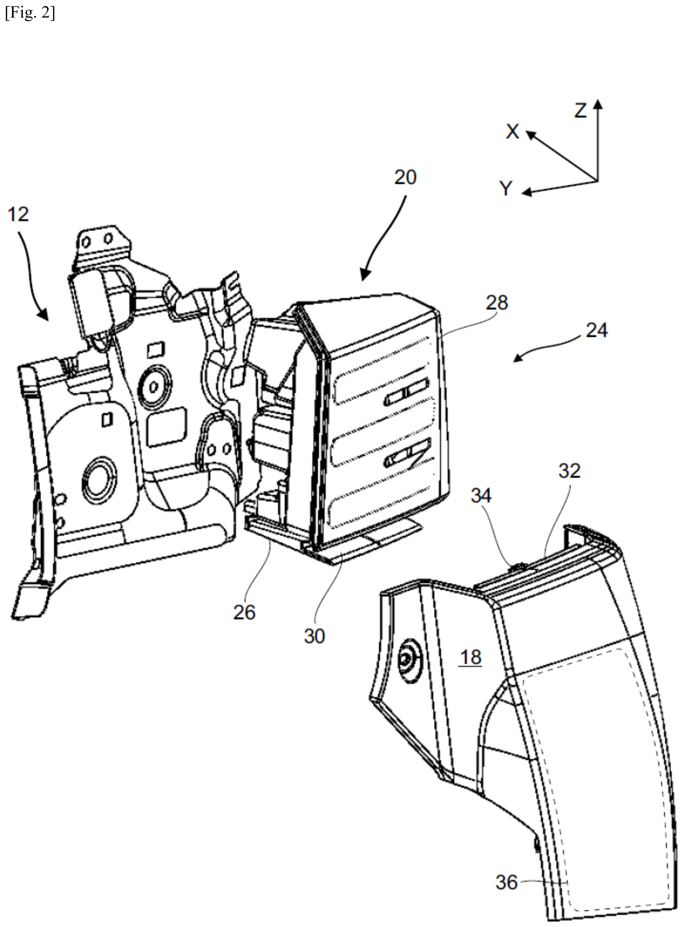

La figure 2 présente un éclaté d'un ensemble arrière de véhicule automobile, selon un mode de réalisation de l'invention. Le véhicule automobile peut correspondre à celui présenté en relation avec la figure 1. L'ensemble arrière comporte une portion de la structure principale 12, un dispositif lumineux 20, une portion de peau de pare-chocs arrière 18. En l'occurrence, le dispositif lumineux 20 est un dispositif lumineux arrière 24.

Le dispositif lumineux 20 comprend un boîtier 26, une glace extérieure 28. Ils délimitent entre eux un logement recevant une source lumineuse (non représentée). La glace extérieure 28 est une glace de protection. Elle ferme de manière étanche le logement. Elle forme la carrosserie. La glace extérieure 28 présente un bord dit premier bord. Le premier bord est un bord de finition. La source lumineuse peut comprendre une diode électroluminescente, ou un laser. Le dispositif lumineux 20 peut comprendre des guides de lumière. La glace extérieure 28 est destinée à épouser la peau de pare-chocs arrière 18.

Le boîtier 26 est monobloc. Il est préférentiellement venu de matière. Il est produit par moulage. Son homogénéité de matière améliore sa résistance aux chocs. Les coûts de réparation restent maîtrisés en cas de choc à basse vitesse.

Le boîtier 26 présente une gorge de maintien 30. La gorge de maintien 30 est par exemple une gorge centrale. Elle est préférentiellement une gorge inférieure. Elle est présente en bord inférieur de la glace extérieure 28. La gorge de maintien 30 s'étend transversalement. Elle est ouverte longitudinalement ; préférentiellement vers l'arrière. La gorge de maintien 30 est continue.

La peau de pare-chocs, préférentiellement la peau de pare-chocs arrière 18, présente un bord, désigné en tant que deuxième bord 32. Le deuxième bord 32 est un bord de positionnement. Le deuxième bord 32 est destiné à être agencé dans la gorge de maintien 30 afin de positionner la peau de pare-chocs par rapport au dispositif lumineux 20. Il est un bord supérieur. Dans la configuration assemblée, le deuxième bord 32 épouse le premier bord afin de ménager un jeu de finition. La finesse et le contrôle de l'homogénéité de ce jeu de finition augmentent la qualité perçue.

Le deuxième bord 32 comprend un orifice de rétention 34 destiné à coopérer avec des moyens de rétention de la gorge de maintien 30. L'orifice de rétention 34 forme un perçage traversant la peau de pare-chocs arrière 18.

Le véhicule automobile comprend un renfort 36 de la peau de pare-chocs arrière 18. Le renfort 36 forme une doublure épousant la surface intérieure de la peau de pare-chocs arrière 18. Le renfort 36 comprend par exemple une plaque. Le renfort 36 est à distance de la gorge de maintien 30 ; préférentiellement verticalement à distance. Le positionnement apporté par la gorge de maintien 30 permet de réduire la taille du renfort 36, donc d'alléger le système de pare-chocs.

Selon une alternative de l'invention, le dispositif lumineux est un dispositif lumineux avant.

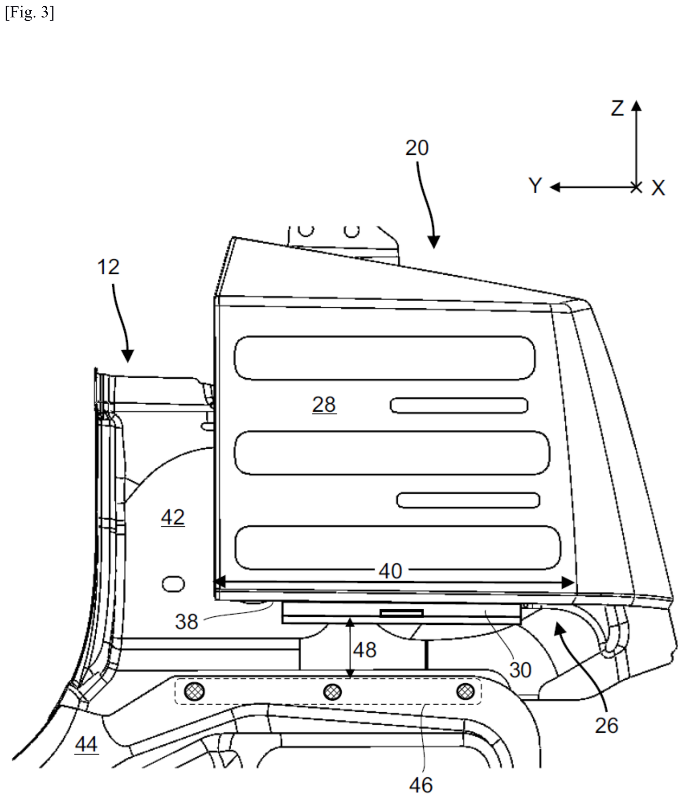

La figure 3 présente de l'arrière un dispositif lumineux 20 monté sur une structure principale 12 de véhicule automobile, selon un mode de réalisation de l'invention. Le véhicule automobile peut correspondre à celui présenté en relation avec l'une des figures 1 à 2. Le dispositif lumineux 20 est ici un dispositif lumineux arrière.

La glace extérieure 28 recouvre le boîtier 26. Dans le contexte d'un dispositif lumineux arrière, la glace extérieure 28 est teintée. Elle peut comprendre plusieurs teintes. Elle peut comprendre des inserts transparents et teintés. La gorge de maintien 30 fait saillie sous la glace extérieure 28. La glace extérieure 28 comprend un premier bord 38 destiné à longer une peau de pare-chocs (non représentée) et présentant une première longueur 40. La première longueur 40 est mesurée transversalement. Le premier bord 38 est un bord horizontal. Il est un bord inférieur. Il est un bord arrière.

La structure principale 12 comprend une première tôle 42, une deuxième tôle 44 telle une planche arrière, une zone de soudure 46 de la première tôle 42 à la deuxième tôle 44. La zone de soudure 46 est une zone de recouvrement entre la première tôle 42 à la deuxième tôle 44. Ces tôles peuvent être une tôle supérieure et une tôle inférieure respectivement. Au niveau de la zone de soudure 46, la structure principale 12 présente au moins deux tôles se chevauchant. Elle présente au moins deux points de soudure électrique. Les points de soudure forment des aspérités sur les tôles.

La zone de soudure 46 est destinée à être recouverte par la peau de pare-chocs arrière. Le véhicule automobile présente un écartement 48 d'au plus 60 mm, préférentiellement d'au plus 40 mm, entre la zone de soudure 46 et la gorge de maintien 30. L'écartement 48 est préférentiellement vertical. Il est un écartement moyen. La réduction de cet écartement 48 permet d'améliorer la compacité. Grâce à l'intégration de la gorge de maintien 30 au boîtier 26, il est possible de maintenir la peau de pare-chocs arrière sans besoin d'un support en dessous.

Transversalement, la gorge de maintien 30 est en position centrale du dispositif lumineux 20, et préférentiellement du boîtier 26. La gorge de maintien 30 est une gorge de maintien centrale au centre du premier bord 38. Ceci permet un positionnement précis du deuxième bord par rapport au premier bord. Cela soigne la qualité perçue.

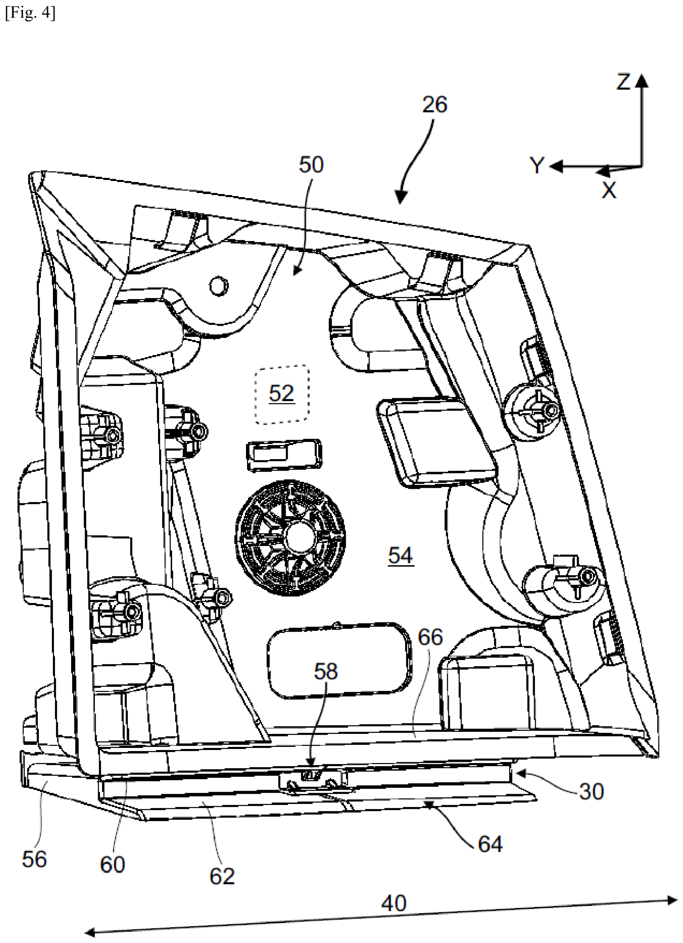

La figure 4 présente un boîtier 26 de dispositif lumineux de véhicule automobile, selon un mode de réalisation de l'invention. Le véhicule automobile peut correspondre à celui présenté en relation avec l'une des figures 1 à 3. La glace extérieure n'est pas représentée par souci de clarté.

Le boîtier 26 est venu de matière. Il forme généralement un caisson. Il présente une forme rectangulaire, cependant toute autre forme est envisagée. Il est ouvert longitudinalement. Il délimite au moins partiellement un logement 50. Le logement 50 forme un évidement. Il reçoit au moins une source lumineuse 52 (représentée symboliquement en pointillés).

Le boîtier 26 comprend une paroi de fond 54 opposée à la glace extérieure et formant le fond du logement 50. La paroi de fond 54 est opposée à l'ouverture qui est fermée par la glace extérieure. La paroi de fond 54 présente des ouvertures pour des branchements électriques de la source lumineuse 52. La paroi de fond 54 comprend des moyens de fixation destinés à être fixés à une structure principale du véhicule automobile.

Le boîtier 26 comprend également une plaque de maintien 56 délimitant la gorge de maintien 30 et s'étendant jusqu'à la paroi de fond 54. La gorge de maintien 30 est une gorge de maintien centrale. Elle est transversalement au centre du boîtier 26.

Cette particularité allonge la plaque de maintien 56, ce qui la rend plus résistante en cas de collision. Elle présente davantage de matière apte à absorber l'énergie d'un choc. En outre, la plaque de maintien 56 se rapproche de la structure principale. Cela facilité un appui contre cette dernière. Dans l'éventualité d'une collision, la plaque de maintien 56 reste solidaire du corps du boîtier 26 au lieu d'être sectionnée à sa zone de jonction.

La gorge de maintien 30 est continue transversalement. Elle forme une gorge de rétention. La gorge de maintien 30 présente des moyens de rétention 58. Les moyens de rétention 58 comprennent une butée destinée à être engagée dans un orifice de rétention de la peau de pare-chocs. Les moyens de rétention 58 sont au centre de la gorge de maintien 30 pour limiter les déformations de la peau de pare-chocs arrière.

La gorge de maintien 30 comprend une face supérieure 60 et une face inférieure 62. Ces faces sont à l'intérieur de la gorge de maintien 30. Elles sont verticalement opposées. Elles forment des surfaces généralement horizontales. Au moins l'une d'elles ou chacune d'elles forme une surface de maintien 64. Chaque surface de maintien 64 est continue, au moins sur la moitié de la première longueur 40. La moitié est mesurée transversalement. Les moyens de rétention 58 sont ponctuels tandis que la surface de maintien 64 est allongée.

Le corps du boîtier 26 et la gorge de maintien 30 sont venus de matière. Ceci en améliore la résistance aux chocs, et optimise le nombre de pièces. Le boîtier 26 est monobloc. Il forme une entité physique.

Le boîtier 26 comprend une paroi de liaison 66. La paroi de liaison 66 délimite le logement 50. Elle est le long de la plaque de maintien 56. Elle est destinée à longer le premier bord. La paroi de liaison 66 s'étend le long de la gorge de maintien 30. Elle est généralement horizontale.

Selon une alternative de l'invention, la plaque de maintien est collée sous le corps du boîtier.

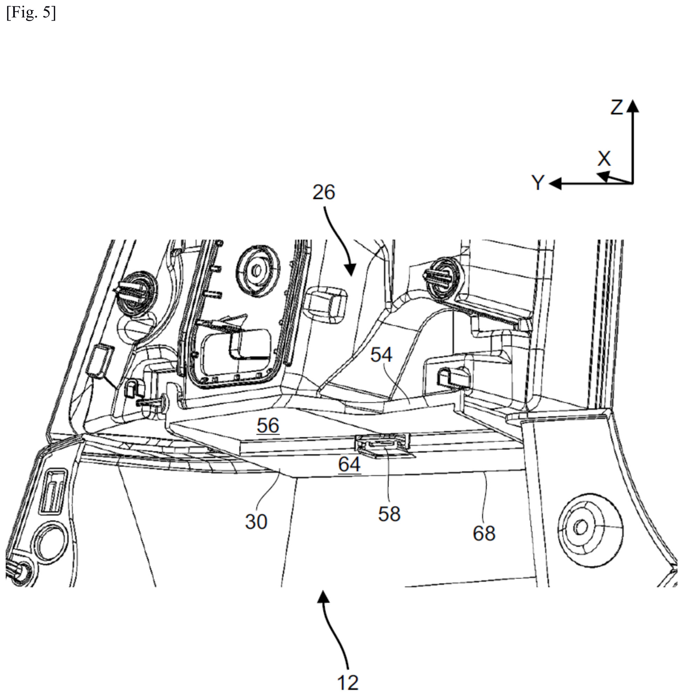

La figure 5 présente une poche de structure principale 12 recevant un boîtier 26 de dispositif lumineux de véhicule automobile, selon un mode de réalisation de l'invention. Le véhicule automobile peut correspondre à celui présenté en relation avec l'une des figures 1 à 4. Le boîtier 26 est représenté par sa plaque de maintien 56 et sa gorge de maintien 30. La paroi de liaison n'est pas représentée par soucis de clarté ; le caisson du boîtier non plus.

Le boîtier 26 comprend une paroi de fond 54 opposée à la glace extérieure et formant le fond du logement. La plaque de maintien 56 s'étend jusqu'à la paroi de fond 54. La paroi de fond 54 est verticale. Le long du premier bord de la glace extérieure, le boîtier 26 comprend une lame de positionnement 68 délimitant la gorge de maintien 30. La lame de positionnement 68 matérialise une surface de maintien 64.

La gorge de maintien 30 comprend une face supérieure et une face inférieure. La face inférieure forme la surface de maintien 64. La surface de maintien 64 est droite. Elle est lisse autour des moyens de rétention 58. Les moyens de rétention 58 sont destinés à coopérer avec le deuxième bord de la peau de pare-chocs afin de bloquer la peau de pare-chocs arrière dans la gorge de maintien 30. Les moyens de rétention 58 comprennent une butée, préférentiellement une butée longitudinale.

Selon un mode de réalisation de l'invention, les moyens de rétention comprennent une agrafe de rétention.

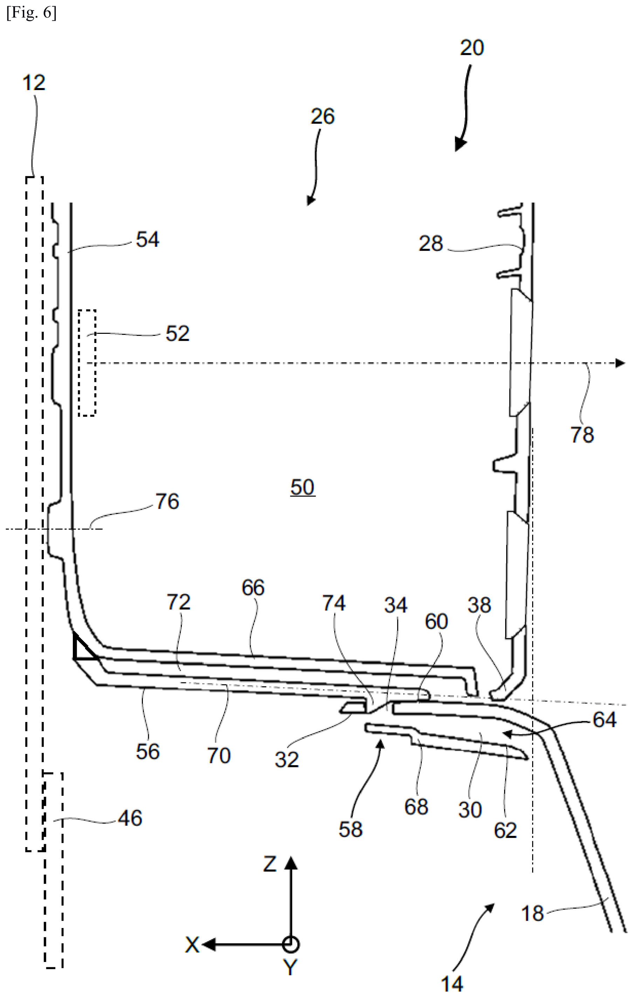

La figure 6 est une coupe d'un dispositif lumineux 20 contribuant au positionnement d'un deuxième bord 32 de peau de pare-chocs 14 de véhicule automobile, selon un mode de réalisation de l'invention. Le véhicule automobile peut correspondre à celui présenté en relation avec l'une des figures 1 à 5. La peau de pare-chocs 14 est préférentiellement une peau de pare-chocs arrière 18.

Le dispositif lumineux 20 comprend un boîtier 26, une glace extérieure 28 fixée au boîtier 26 ; un logement 50 entre le boîtier et la glace extérieure 28 ; une source lumineuse 52 dans le logement 50. La glace extérieure 28 comprend un premier bord 38 longeant une peau de pare-chocs 14 et présente une première longueur. La première longueur est une longueur transversale.

Le boîtier 26 est monobloc et comprend une gorge de maintien 30 avec une surface de maintien 64 continue sur au moins une moitié de la première longueur du premier bord 38. La surface de maintien 64 est destinée à coopérer avec un deuxième bord 32 de la peau de pare-chocs 14. Le deuxième bord 32 est dans la gorge de maintien 30. Préférentiellement, le deuxième bord 32 est un bord supérieur de la peau de pare-chocs 14. La gorge de maintien 30 comprend des moyens de rétention 58 destinés à coopérer avec ledit deuxième bord 32 de peau de pare-chocs 14 afin de maintenir la peau de pare-chocs le long de la glace extérieure.

Le boîtier 26 comprend une paroi de fond 54 opposée à la glace extérieure 28, préférentiellement longitudinalement opposée ; et formant le fond du logement 50. Une plaque de maintien 56 délimite la gorge de maintien 30 et est reliée à la paroi de fond 54. La plaque de maintien 56 comprend un plan moyen 70. Le plan moyen 70 est un plan géométrique. Le plan moyen 70 est généralement horizontal, ou sensiblement incliné par rapport à la direction horizontale. Il est à mi-épaisseur de la plaque de maintien 56. La glace extérieure 28 s'étend jusqu'au niveau dudit plan moyen 70. Le deuxième bord 32 est verticalement au niveau du plan moyen 70. Cet aspect aminci le jeu mécanique entre la glace extérieure 28 et la peau de pare-chocs 14.

Le long du premier bord 38 de la glace extérieure 28, suivant la direction transversale, le boîtier 26 comprend une paroi de liaison 66 contre la glace extérieure 28. La paroi de liaison 66 est une paroi inférieure. Le boîtier 26 comprend également une lame de positionnement 68 délimitant la gorge de maintien 30. La plaque de maintien 56 est entre la paroi de liaison 66 et la lame de positionnement 68. Cet empilement permet un maintien dédié de la peau de pare-chocs 14, et ce indépendamment de la paroi de liaison 66. Le positionnement est plus précis, et résiste aux chocs. Le deuxième bord 32 est en outre entre la plaque de maintien 56 et la lame de positionnement 68.

Préférentiellement, le boîtier 26 comprend une séparation 72 entre la paroi de liaison 66 et la plaque de maintien 56. La séparation 72 forme une lame d'air. La séparation 72 s'étend sur au moins une moitié du logement 50, longitudinalement et/ou transversalement. La séparation 72 apporte une isolation thermique, et une souplesse en cas de choc.

Le deuxième bord 32 comprend un orifice de rétention 34 coopérant avec les moyens de rétention 58. Préférentiellement, les moyens de rétention 58 comprennent une butée 74 engagée dans ledit orifice de rétention 34. Cet aspect améliore le verrouillage, tout en permettant un déplacement relatif en cas de choc.

La gorge de maintien 30 comprend une face supérieure 60 et une face inférieure 62 verticalement opposées. Le premier bord 38 est contre la face supérieure 60, ce qui rapproche la peau de pare-chocs 14 de la glace extérieure 28. Leur jeu mécanique devient plus fin, ce qui améliore la qualité perçue. Le premier bord 38 est verticalement à distance de la face inférieure 62.

Le boîtier 26 comprend des moyens de fixation 76 fixés à la structure principale 12. Les moyens de fixation 76 s'étendent longitudinalement. Ils comprennent des axes tels des vis. Les moyens de fixation 76 sont verticalement à distance de la gorge de maintien 30. Ceci permet un déport de la fixation, et améliore sa facilité d'implantation. Elle peut éviter un obstacle, tel la zone de soudure 46.

Le dispositif lumineux 20 comprend une direction principale 78 d'émission lumineuse. La direction principale 78 correspond à une direction de sortie du rayonnement issu de la source lumineuse 52, hors du dispositif lumineux 20. La direction principale 78 correspond à la direction longitudinale. La première longueur est transversale à ladite direction principale 78. Elles sont perpendiculaires.

Selon un mode de réalisation préféré, le boîtier 26 est réalisé en un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylène, polyamide, polyphtalamide, polyétheréthercétone, polysulfure de phénylène, polyamide-imide, polyétherimide, polyarylamide, polyépoxyde, polyester insaturé, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

Le boîtier 26 comprend au moins 10 % en poids de matériau plastique recyclé basé sur le poids total du matériau plastique ; de préférence de 10 à 80% en poids ; plus préférentiellement de 20 à 60% en poids ou de 30 à 40% en poids. L'emploi de matériau plastique recyclé diminue l'empreinte écologique du véhicule.

L'invention comprend la combinaison de tous les modes de réalisation illustrés par toutes les figures.

Les figures 2 à 6 sont des vues isométriques. Elles respectent chacune une échelle spécifique, des angles réels et des proportions réelles.

## Revendications

1. Dispositif lumineux (20) de véhicule automobile (10) ; le dispositif lumineux (20) comprenant un boîtier (26), une glace extérieure (28) fixée au boîtier (26) ; un logement (50) entre le boîtier (26) et la glace extérieure (28) ; une source lumineuse (52) dans le logement (50) ; la glace extérieure (28) comprenant un premier bord (38) destiné à longer une peau de pare-chocs (14) et présentant une première longueur (40) ; **caractérisé en ce que** le boîtier (26) est monobloc et comprend une gorge de maintien (30) avec une surface de maintien (64) continue sur au moins une moitié de la première longueur (40) du premier bord (38), ladite surface de maintien (64) étant destinée à coopérer avec un deuxième bord (32) de la peau de pare-chocs (14) et comprenant des moyens de rétention (58) destinés à coopérer avec ledit deuxième bord (32) de peau de pare-chocs (14) afin de maintenir la peau de pare-chocs (14) le long de la glace extérieure (28).

2. Dispositif lumineux (20) selon la revendication 1, **caractérisé en ce que** le boîtier (26) comprend une paroi de fond (54) opposée à la glace extérieure (28) et formant le fond du logement (50) ; une plaque de maintien (56) délimitant la gorge de maintien (30) et s'étendant jusqu'à la paroi de fond (54).

3. Dispositif lumineux (20) selon la revendication 2, **caractérisé en ce que** la plaque de maintien (56) comprend un plan moyen (70), la glace extérieure (28) s'étendant jusqu'au niveau dudit plan moyen (70).

4. Dispositif lumineux (20) selon l'une des revendications 2 à 3, **caractérisé en ce que** le long du premier bord (38) de la glace extérieure (28), le boîtier (26) comprend une paroi de liaison (66) contre la glace extérieure (28) ; une lame de positionnement (68) délimitant la gorge de maintien (30), la plaque de maintien (56) étant entre la paroi de liaison (66) et la lame de positionnement (68).

5. Dispositif lumineux (20) selon l'une des revendications 1 à 4, **caractérisé en ce que** la gorge de maintien (30) est une gorge de maintien centrale au centre du premier bord (38) ; préférentiellement, le boîtier (26) est venu de matière.

6. Véhicule automobile (10) comprenant : une structure principale (12) ; un dispositif lumineux (20) ; une peau de pare-chocs (14) ; **caractérisé en ce que** le dispositif lumineux (20) est conforme à l'une des revendications 1 à 5 ; et **en ce que** la peau de pare-chocs (14) comprend un deuxième bord (32) dans la gorge de maintien (30) ; préférentiellement, le deuxième bord (32) est un bord supérieur et la peau de pare-chocs (14) est une peau de pare-chocs arrière (18).

7. Véhicule automobile (10) selon la revendication 6, **caractérisé en ce que** le deuxième bord (32) comprend un orifice de rétention (34) coopérant avec les moyens de rétention (58) ; les moyens de rétention (58) comprennent une butée (74) engagée dans ledit orifice de rétention (34), et/ou la première longueur (40) est une longueur transversale.

8. Véhicule automobile (10) selon l'une des revendications 6 à 7, **caractérisé en ce que** la gorge de maintien (30) comprend une face supérieure (60) et une face inférieure (62), le premier bord (38) étant contre la face supérieure (60) ; le premier bord (38) étant verticalement à distance de la face inférieure (62).

9. Véhicule automobile (10) selon l'une des revendications 6 à 8, **caractérisé en ce que** le boîtier (26) comprend des moyens de fixation (76) fixés à la structure principale ; les moyens de fixation (76) étant verticalement à distance de la gorge de maintien (30).

10. Véhicule automobile (10) selon l'une des revendications 6 à 9, **caractérisé en ce que** la structure principale comprend une première tôle (42), une deuxième tôle (44), une zone de soudure (46) de la première tôle (42) à la deuxième tôle (44), la zone de soudure (46) étant recouverte par la peau de pare-chocs (14) ; le véhicule automobile (10) présentant un écartement (48) d'au plus 60 mm, préférentiellement d'au plus 40 mm entre la zone de soudure (46) et la gorge de maintien (30).
